# EUROPÄISCHE PATENTSCHRIFT

(11) **EP 3 588 051 B1**
(45) Veröffentlichungstag und Bekanntmachung des Hinweises auf die Patenterteilung: **04.08.2021**
(21) Anmeldenummer: 19020259.8
(22) Anmeldetag: 05.04.2019
(51) Int. Cl.: G01M 15/10, F02D 35/02

(54) **VERFAHREN ZUR VISUALISIERUNG EINES VERBRENNUNGSPROZESSES EINES KRAFTSTOFF-LUFT-GEMISCHS**
METHOD FOR VISUALISING A COMBUSTION PROCESS OF A FUEL-AIR MIXTURE
PROCÉDÉ DE VISUALISATION D'UN PROCÉDÉ DE COMBUSTION D'UN MÉLANGE AIR-CARBURANT

(30) Priorität: 22.06.2018 DE 102018115022
(43) Veröffentlichungstag der Anmeldung: 01.01.2020
(73) Patentinhaber: Dr.Ing. h.c. F. Porsche Aktiengesellschaft, 70435 Stuttgart (DE)
(72) Erfinder: Feuerer, Patrick, 71155 Altdorf (DE); Combe, Timo, 71106 Magstadt (DE)

(56) Entgegenhaltungen:
- EP-A1- 2 461 009
- EP-A2- 1 998 032
- DE-A1- 10 066 074
- US-A1- 2007 281 260

## Beschreibung

Die vorliegende Erfindung betrifft ein Verfahren zur Visualisierung eines Verbrennungsprozesses eines Kraftstoff-Luft-Gemischs innerhalb eines Brennraums einer Brennkraftmaschine, wobei mittels einer mehrkanaligen optischen Messsonde Flammlichtsignale, die während der Verbrennung des Kraftstoff-Luft-Gemischs innerhalb des Brennraums generiert werden, in mehreren Detektionsvolumina erfasst werden und wobei die Lichtintensitäten der Flammlichtsignale von einer Auswerte- und Visualisierungseinrichtung ausgewertet und grafisch visualisiert werden.

Bei der Verbrennung eines Kraftstoff-Luft-Gemischs innerhalb eines Brennraums einer Brennkraftmaschine entsteht Lichtstrahlung, die sich hauptsächlich aus einer Chemolumineszenz und einem so genannten Rußleuchten zusammensetzt. Bei der Oxidation von CH-Molekülen im Brennraum entstehen Zwischen- und Endprodukte, die unterschiedliche molekulare Anregungszustände durchlaufen. Die dadurch entstehende Lichtstrahlung wird als Chemolumineszenz bezeichnet. Bei dem Rußleuchten handelt es sich um thermische Strahlung von Rußpartikeln, die in Diffusionsflammen entsteht und aufgrund ihrer spektralen Wellenlänge für das menschliche Auge sichtbar ist.

Eine Messung der Lichtintensität der innerhalb des Brennraums während des Verbrennungsprozesses generierten Lichtstrahlung durch die Erfassung von Flammlichtsignalen erlaubt insbesondere Rückschlüsse über die Art und die Güte des Verbrennungsprozesses des Kraftstoff-Luft-Gemischs. So ist es bei der Bewertung von Verbrennungsprozessen zum Beispiel möglich, Situationen zu erkennen, in denen das für die Verbrennung vorgesehene Kraftstoff-Luft-Gemisch nicht ausreichend aufbereitet ist, so dass es insbesondere zu Zündaussetzern oder sonstigen irregulären Verbrennungsprozessen kommen kann, die sich unter Umständen negativ auf das Emissionsverhalten der Brennkraftmaschine auswirken können.

Aus der EP 1 998 032 A2 ist ein Verfahren zur Bewertung eines Verbrennungsprozesses eines Kraftstoff-Luft-Gemischs bekannt, welches insbesondere die Analyse der Homogenität des Verbrennungsprozesses ermöglicht, der innerhalb des Brennraums einer Brennkraftmaschine stattfindet. Eine Interpretation und Bewertung der Messergebnisse, welche die innerhalb des Brennraums der Brennkraftmaschine aus Flammlichtsignalen erhaltenen Lichtintensitäten repräsentieren, erfolgt typischerweise mit Hilfe mehrerer zweidimensionaler Diagramme, die mittels einer Auswerte- und Visualisierungseinrichtung, welche die Messergebnisse auswertet und in geeigneter Weise aufbereitet, grafisch visualisiert werden können. Dadurch ist allerdings nur die Eingrenzung der gemessenen Lichtintensitäten auf ein bestimmtes Detektionsvolumen innerhalb des Brennraums der Brennkraftmaschine möglich. Ferner kann eine Richtungsinformation aus den gemessenen Flammlichtsignalen extrahiert werden. Neben der Lichtintensität im Brennraum und der Richtungsinformation kann über den Kurbelwellenwinkel (gemessen in °KW) den Flammlichtsignalen auch eine "Zeitinformation" zugeordnet werden. Aus diesen zweidimensionalen Diagrammen, die zur Versuchsauswertung und Bewertung des Verbrennungsprozesses des Kraftstoff-Luft-Gemischs herangezogen werden, geht somit nicht unmittelbar hervor, an welchem Ort des Detektionsvolumens sich die Flamme befunden hat, die das messtechnisch erfasste Flammlichtsignal erzeugt hat.

Die EP 2 461 009 A1 offenbart ein Verfahren zur Bewertung des Zustandes eines Kraftstoff-Luftgemisches und/oder der Verbrennung in zumindest einem Brennraum einer Brennkraftmaschine, wobei in einer Datenbank Mustersignale von Flammlichtsignalen abgelegt werden, und wobei Flammlichtsignale der Verbrennung im Brennraum erfasst und mit den abgelegten Mustersignalen verglichen werden, und wobei bei Übereinstimmung zwischen gemessenen und abgelegten Signalmustern eine Bewertung des Zustandes abgegeben wird. Um auf möglichst einfache Weise eine Überwachung der Verbrennung zu ermöglichen, ist vorgesehen, dass im Brennraum zumindest zwei Bereiche über verschiedene Kanäle eines optischen Mehrkanalsensors erfasst werden, dass die Mustersignale in der Datenbank mit zugeordneten Emissionswerten, den Partikelemissionen, abgelegt werden und bei Übereinstimmung zwischen gemessenen und abgelegten Signalmustern für den Brennraum des jeweiligen Zylinders eine Bewertung des Zustandes der Verbrennung im Hinblick auf die entstehenden Partikelemissionen, durchgeführt wird, wobei ein Grenzwert für die Flammlichtintensität definiert wird, und dass bei Überschreiten des Grenzwertes in zumindest einem Zylinder eine Maßnahme zur Verringerung der Partikelemissionen in dem betreffenden Zylinder durchgeführt wird.

Aus der DE 100 66 074 A1 ist ein Verfahren zur Bewertung der Verbrennung bei geschichteter Ladung, vorzugsweise für direkteinspritzende Otto-Motoren, zum Ermitteln von zeit- beziehungsweise kurbelwinkelbezogenen Einspritzkenngrößen bekannt.

Die US 2007/0281260 A1 offenbart ein Flammendetektionsverfahren für Ofen- und Brennersysteme.

Die vorliegende Erfindung macht es sich zur Aufgabe, ein weiter verbessertes Verfahren zur Visualisierung eines Verbrennungsprozesses eines Kraftstoff-Luft-Gemischs in einem Brennraum einer Brennkraftmaschine anzugeben, das insbesondere eine einfachere Bewertung des Verbrennungsprozesses ermöglicht.

Die Lösung dieser Aufgabe liefert ein Verfahren zur Visualisierung eines Verbrennungsprozesses eines Kraftstoff-Luft-Gemischs der eingangs genannten Art mit den Merkmalen des kennzeichnenden Teils des Anspruchs 1. Die Unteransprüche betreffen vorteilhafte Weiterbildungen der Erfindung.

Ein erfindungsgemäßes Verfahren zur Visualisierung eines Verbrennungsprozesses eines Kraftstoff-Luft-Gemischs in einem Brennraum einer Brennkraftmaschine zeichnet sich dadurch aus, dass Informationen über die Position der Flamme innerhalb der Detektionsvolumina durch die Bildung von Hypothesen, die mögliche Orte der Flammenentstehung und mögliche Arten der Flammenausbreitung innerhalb des Brennraums der Brennkraftmaschine beinhalten, und durch die Auswahl einer am wahrscheinlichsten Hypothese mittels eines in der Auswerte- und Visualisierungseinrichtung implementierten mathematischen Bewertungsalgorithmus bereitgestellt werden und von der Auswerte- und Visualisierungseinrichtung grafisch visualisiert werden, wobei von dem mathematischen Bewertungsalgorithmus eine Mehrzahl von Einflussgrößen im Hinblick darauf bewertet wird, mit welcher Einzelwahrscheinlichkeit jede dieser Einflussgrößen zur Ausbildung einer der Hypothesen beiträgt, und wobei der mathematische Bewertungsalgorithmus aus den Einzelwahrscheinlichkeiten eine Gesamtwahrscheinlichkeit für das Auftreten jeder einzelnen Hypothese bildet. Die Erfindung sieht vor, dass die bislang bei der Auswertung der Flammlichtsignale fehlenden Informationen über deren Positionen innerhalb der Detektionsvolumina durch die Bildung und Bewertung von Hypothesen zur Verfügung gestellt werden. Diese Hypothesen beinhalten mögliche Orte der Flammenentstehung und mögliche Arten der Flammenausbreitung innerhalb des Brennraums der Brennkraftmaschine. In der Auswerte- und Visualisierungseinrichtung ist ein mathematischer Bewertungsalgorithmus implementiert, mittels dessen eine Bewertung der am wahrscheinlichsten Hypothese erfolgt. Somit wird die Möglichkeit geschaffen, auch die Flammenposition entlang der Längsachsen der Detektionsvolumina zu erhalten, da die hierfür notwendigen, bislang fehlenden Informationen durch die Hypothesenbildung und deren Bewertung bereitgestellt werden können. Diese zusätzlichen Informationen fließen in die grafische Visualisierung ein und ermöglichen eine einfachere Bewertung des Verbrennungsprozesses. Beispiele für Einflussgrößen für die Bewertung der am wahrscheinlichsten Hypothese sind im Hinblick auf einen Injektor der Brennkraftmaschine insbesondere der Injektortyp, die Injektorlage, der Injektorzustand sowie die richtungsabhängige Mengenaufteilung des Kraftstoffs, im Hinblick auf die Applikation insbesondere der Einspritzdruck, die zeitliche Mengenaufteilung des Kraftstoffs, das Einspritztiming sowie die Ventilsteuerzeiten und der Zündzeitpunkt. Im Hinblick auf die Strömungsbedingungen sind wichtige Einflussgrößen: Drall, Tumble sowie das Turbulenzniveau. Hinsichtlich der Kolbengeometrie sind wichtige Einflussgrößen insbesondere die Ausgestaltungen der Kolbenmulde und der Ventiltaschen. Diese Einflussgrößen sind lediglich beispielhaft. Weitere Einflussgrößen können in die Bewertung einfließen.

In einer bevorzugten Ausführungsform wird vorgeschlagen, dass die Flammlichtsignale in mehreren unterschiedlichen Ebenen innerhalb des Brennraums erfasst werden. Zu diesem Zweck können einzelne Messeinrichtungen der mehrkanaligen optischen Messsonde, die insbesondere durch Lichtleitfasern gebildet werden können, in unterschiedlichen Detektionsebenen innerhalb des Brennraums angeordnet werden.

In einer besonders bevorzugten Ausführungsform kann vorgesehen sein, dass ein Zeitsignal, insbesondere ein Kurbelwinkelsignal, erfasst wird, dem die Flammlichtsignale zugeordnet werden. Dadurch kann der zeitliche Verlauf der Flammlichtsignale analysiert werden, so dass zum Beispiel Informationen über die Ursachen erhöhter Emissionen der Brennkraftmaschine erhalten und grafisch visualisiert werden können. ,

Um eine besonders einfache und intuitive Auswertung beziehungsweise Bewertung der Flammlichtsignale zu ermöglichen, wird in einer besonders vorteilhaften Ausführungsform vorgeschlagen, dass von der Auswerte- und Visualisierungseinrichtung eine Darstellung des Verbrennungsprozesses des Kraftstoff-Luft-Gemischs als dreidimensionale Animation erzeugt und grafisch visualisiert wird.

Vorzugsweise können als Merkmale, die von dem mathematischen Bewertungsalgorithmus zur Unterscheidung der Hypothesen ausgewertet werden, insbesondere die Ausbreitung der Flammlichtsignale in den einzelnen Sensorkanälen der mehrkanaligen optischen Messsonde, vorzugsweise in den unterschiedlichen Sensorebenen der Messsonde, und/oder die Intensität im Vergleich zu einem Vormischanteil und/oder der Zeitpunkt der Lichtstrahlung, die zu den erfassten Flammlichtsignalen führt, und/oder die Zeitdauer der Flammlichtsignale ausgewählt werden.

In einer weiteren vorteilhaften Ausführungsform wird vorgeschlagen, dass von der Auswerte- und Visualisierungseinrichtung zusätzliche Hilfssignale von der Brennkraftmaschine empfangen und verarbeitet werden, die ebenfalls in die Auswertung und Visualisierung der Flammlichtsignale einfließen. Beispielsweise kann es sich bei diesen Hilfssignalen um Drucksignale, insbesondere Zylinderdrucksignale, und/oder Zündsignale, insbesondere der Zündzeitpunkt, der Brennkraftmaschine handeln.

Vorzugsweise können in der Auswerte- und Visualisierungseinrichtung Referenzsignale abrufbar gespeichert werden, die mit den gemessenen Flammlichtsignalen verglichen werden. Dieser Vergleich kann insbesondere durch eine Visualisierung, insbesondere eine durch dreidimensionale Animation, der Referenzsignale und der Flammlichtsignale erfolgen.

Das hier vorgestellte Verfahren, das unter anderem als Hilfsmittel für einen Vergleich von unterschiedlichen Injektoren, zur Festlegung von Einspritzstrategien, für das Auffinden von Klopforten innerhalb des Brennraums sowie für die Betrachtung der Flammenausbreitung einsetzbar ist, kann insbesondere in einem statischen oder dynamischen Motorenprüfstand oder auch in einem Rollenprüfstand für Kraftfahrzeuge durchgeführt werden.

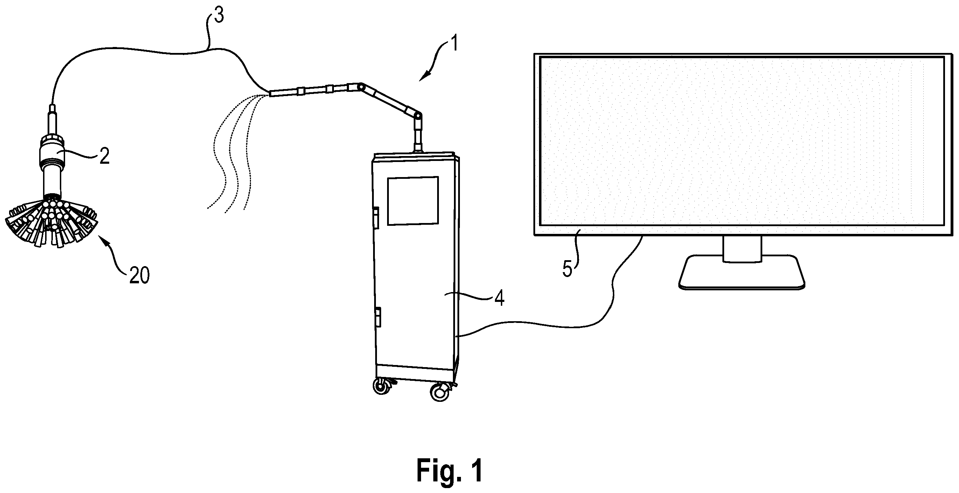

Weitere Merkmale und Vorteile der vorliegenden Erfindung werden deutlich anhand der nachfolgenden Beschreibung eines bevorzugten Ausführungsbeispiels unter Bezugnahme auf die beiliegende Fig. 1, die eine Messvorrichtung 1, die zur Durchführung eines Verfahrens zur Visualisierung eines Verbrennungsprozesses eines Kraftstoff-Luft-Gemischs gemäß einem bevorzugten Ausführungsbeispiel der vorliegenden Erfindung eingerichtet ist, in schematischer Darstellung zeigt.

Bei der Verbrennung eines Kraftstoff-Luft-Gemischs innerhalb eines Brennraums einer Brennkraftmaschine entsteht Lichtstrahlung, die sich hauptsächlich aus einer Chemolumineszenz und einem so genannten Rußleuchten zusammensetzt. Bei der Oxidation von CH-Molekülen innerhalb des Brennraums entstehen Zwischen- sowie Endprodukte, die unterschiedliche molekulare Anregungszustände durchlaufen. Die dadurch entstehende Lichtstrahlung wird als Chemolumineszenz bezeichnet. Bei dem Rußleuchten handelt es sich um thermische Strahlung von Rußpartikeln, die in Diffusionsflammen entsteht und aufgrund ihrer spektralen Wellenlänge für das menschliche Auge sichtbar ist.

Unter Bezugnahme auf Fig. 1 umfasst die Messvorrichtung 1, die zur Durchführung eines Verfahrens zur Visualisierung eines Verbrennungsprozesses eines Kraftstoff-Luft-Gemischs innerhalb des Brennraums einer Brennkraftmaschine eingerichtet ist, eine mehrkanalige optische Messsonde 2, die vorliegend als Zündkerze ausgebildet ist und eine Vielzahl von Lichtleitfasern umfasst, die sich in der Montagesolllage abschnittsweise in den Brennraum der Brennkraftmaschine hinein erstrecken. Diese Lichtleitfasern können Flammlichtsignale, die während der Verbrennung eines Kraftstoff-Luft-Gemischs innerhalb des Brennraums generiert werden, erfassen. Das Detektionsvolumen 20 jeder der Lichtleitfasern wurde in Fig. 1 jeweils durch einen Detektionskegel visualisiert. Die Lichtleitfasern können zum Beispiel in vier Gruppen angeordnet und derart platziert sein, dass eine erste Gruppe die Flammlichtsignale in einer ersten Ebene, eine zweite Gruppe die Flammlichtsignale in einer zweiten Ebene, eine dritte Gruppe die Flammlichtsignale in einer dritten Ebene und eine vierte Gruppe die Flammlichtsignale in einer vierten Ebene innerhalb des Brennraums erfassen kann. Die Lichtleitfasern werden mittels eines oder mehrerer Lichtleiter 3, innerhals dessen sie angeordnet sind, aus der optischen Messsonde 2 herausgeführt.

Ferner umfasst die Messvorrichtung 1 einen Messsignal-Wandler 4, an den der Lichtleiter 3 beziehungsweise die Lichtleiter 3 angeschlossen ist/sind. Der Messsignal-Wandler 4 weist vorzugsweise eine Mehrzahl von Photodioden und Analog-Digital-Wandlern auf. Die Photodioden sind dazu eingerichtet, die von den Lichtleitfasern des Lichtleiters 3 beziehungsweise der Lichtleiter 3 übertragenen Flammlichtsignale (Intensitätssignale) in analoge elektrische Messsignale zu wandeln. Diese analogen elektrischen Messsignale werden mit Hilfe der Analog-Digital-Wandler des Messsignal-Wandlers 4 in digitale Messsignale gewandelt, die als Ausgangssignale von dem Messsignal-Wandler 4 ausgegeben werden können.

Die Messvorrichtung 1 weist ferner eine Auswerte- und Visualisierungseinrichtung 5 auf, die an den Messsignal-Wandler 4 angeschlossen ist. Die Auswerte- und Visualisierungseinrichtung 5 ist insbesondere dazu eingerichtet, die von dem Messsignal-Wandler 4 bereitgestellten digitalen Messsignale aufzuzeichnen, zu verarbeite und auszuwerten. Ferner können die Messsignale, die Informationen über die Lichtintensitäten der Flammlichtsignale innerhalb des Brennraums der Brennkraftmaschine liefern, grafisch aufbereitet und von der Auswerte- und Visualisierungseinrichtung 5 für einen Benutzer grafisch visualisiert werden. Darüber hinaus ist die Auswerte- und Visualisierungseinrichtung 5 vorzugsweise auch dazu eingerichtet, zusätzliche Hilfssignale von der Brennkraftmaschine zu empfangen und zu verarbeiten, die ebenfalls in die Auswertung und Visualisierung der Messsignale einfließen können. Beispielsweise kann es sich bei diesen Hilfssignalen um Drucksignale, insbesondere um Zylinderdrucksignale, und/oder Zündsignale der Brennkraftmaschine handeln. Vorzugsweise ist die Auswerte-.und Visualisierungseinrichtung 5 auch dazu ausgebildet, die optische Messsonde 2 vor dem eigentlichen Beginn der Messungen zu kalibrieren.

Eine Interpretation und Bewertung der Messergebnisse, welche die gemessenen Lichtintensitäten der Flammlichtsignale innerhalb des Brennraums repräsentieren, kann grundsätzlich mit Hilfe mehrerer zweidimensionaler Diagramme erfolgen, die mittels der Auswerte- und Visualisierungseinrichtung 5 generiert und grafisch visualisiert werden können. Allerdings ist dadurch nur die Eingrenzung der gemessenen Lichtintensitäten auf ein bestimmtes Detektionsvolumen 20 innerhalb des Brennraums der Brennkraftmaschine möglich. Darüber hinaus kann aus den erfassten Flammlichtsignalen auch eine Richtungsinformation extrahiert werden, so dass dadurch Rückschlüsse auf die Flammenausbreitungsrichtung gezogen werden können. Aus diesen zweidimensionalen Diagrammen geht allerdings nicht sofort hervor, wo genau im Detektionsvolumen 20 sich die Flamme, die das messtechnisch erfasste Flammlichtsignal erzeugt hat, befunden hat. Neben der Lichtintensität im Brennraum kann über den Kurbelwellenwinkel (gemessen in °KW) den Flammlichtsignalen auch eine "Zeitinformation" zugeordnet werden. Eine Interpretation und Bewertung der in dieser Form bereitgestellten Messergebnisse ist somit mit einem relativ hohen Aufwand verbunden und erfordert ein fundiertes Expertenwissen.

Um die Interpretation und Bewertung der von der Auswerte- und Visualisierungseinrichtung 5 visualisierten Messsignale, welche die messtechnisch erfassten Flammlichtsignale innerhalb des Brennraums der Brennkraftmaschine repräsentieren, zu vereinfachen, wird vorgeschlagen, dass die bislang bei der Auswertung fehlenden Informationen über die Positionen der Flammlichtsignale innerhalb der Detektionsvolumina 20 durch die Bildung von Hypothesen zur Verfügung gestellt werden. Diese Hypothesen beinhalten mögliche Orte der Flammenentstehung und mögliche Arten der Flammenausbreitung. In der Auswerte- und Visualisierungseinrichtung 5 ist zu diesem Zweck ein mathematischer Bewertungsalgorithmus implementiert, mittels dessen eine Bewertung der am wahrscheinlichsten Hypothese erfolgt. Somit wird erstmals die Möglichkeit geschaffen, auch die Flammenpositionen entlang der Längsachsen der Detektionsvolumina 20 zu erhalten, da die hierfür notwendigen, bislang fehlenden Informationen durch die Hypothesenbildung bereitgestellt werden können. Diese zusätzlichen Informationen können in die Auswertung und Visualisierung des Verbrennungsprozesses des Kraftstoff-Luft-Gemischs einfließen.

In einem weiteren Verfahrensschritt wird von der Auswerte- und Visualisierungseinrichtung 5 eine Darstellung des Verbrennungsprozesses des Kraftstoff-Luft-Gemischs als dreidimensionale. Animation erzeugt und visualisiert, so dass eine einfache und anschauliche Auswertung und Interpretation der Flammlichtsignale vorgenommen werden kann.

Bei der Bildung der Hypothesen über den Flammenentstehungsort und die Flammenausbreitung kann insbesondere unterschieden werden, ob diese
a) ursächlich von einer Verbrennungseinleitung ausgehen,
b) ursächlich von einer Diffusionsflammenentstehung ausgehen,
c) ursprünglich vom Klopfen beziehungsweise einer Vorentflammung ausgehen oder
d) nicht ursächlich fortschreitend sind.

Weitere Unterscheidungskriterien sind grundsätzlich möglich.

Wenn das Flammlichtsignal ursächlich von der Verbrennungseinleitung ausgeht, begründet dieses die Hypothese, dass die Ausbreitung der Flamme von der Zündkerze (Flammenentstehungsort) in Richtung eines dieser Zündkerze zugeordneten Kolbens erfolgt.

Wenn eine Diffusionsflammenentstehung ursächlich ist, kann unterschieden werden, ob diese aufgrund eines inhomogenen Kraftstoff-Luft-Gemischs oder aufgrund einer Kraftstoffbenetzung, insbesondere an den Brennraumorten Ventil oder Injektor oder Liner oder Kolbenmulde oder Ventiltasche oder Feuersteg, hervorgerufen wird.

Wenn die Hypothese aufgestellt wird, dass ein Klopfen beziehungsweise eine Vorentflammung für die Flammenentstehung ursächlich ist, kann angenommen werden, dass das Klopfen in der Nähe des Feuerstegs entsteht und dass der Hauptausgangsort für die Vorentflammung die Zündkerze ist.

Der in der Auswerte- und Visualisierungseinrichtung 5 implementierte mathematische Bewertungsalgorithmus ist dazu ausgebildet, diese unterschiedlichen Hypothesen zu bewerten und dadurch die am wahrscheinlichsten zutreffende Hypothese zu ermitteln, so dass diese wahrscheinlichste Hypothese die fehlenden Informationen über den Flammenentstehungsort zur Verfügung stellen kann und der dreidimensionalen Animation zur Visualisierung der Flammlichtsignale zugrunde gelegt werden kann.

Wichtige Merkmale zur Unterscheidung und Visualisierung der Hypothesen, die in den mathematischen Bewertungsalgorithmus einfließen, sind insbesondere die Ausbreitung der Flammen in den einzelnen Sensorkanälen beziehungsweise Sensorebenen der mehrkanaligen optischen Messsonde 2, die durch die Lichtleitfasern gebildet werden, und in den unterschiedlichen Sensorebenen, die Intensität im Vergleich zum Vormischanteil, der Zeitpunkt der Lichtstrahlung (definiert durch den Kurbelwellenwinkel, gemessen in °KW), die zu dem erfassten Flammlichtsignal führt, sowie die Zeitdauer der Lichtstrahlung.

Wichtige Einflussgrößen für die Bewertung der am wahrscheinlichsten Hypothese sind im Hinblick auf den Injektor der Brennkraftmaschine insbesondere der Injektortyp, die Injektorlage, der Injektorzustand sowie die richtungsabhängige Mengenaufteilung des Kraftstoffs, im Hinblick auf die Applikation insbesondere der Einspritzdruck, die zeitliche Mengenaufteilung des Kraftstoffs, das Einspritztiming sowie die Ventilsteuerzeiten. Im Hinblick auf die Strömungsbedingungen sind wichtige Einflussgrößen: Drall, Tumble sowie das Turbulenzniveau. Hinsichtlich der Kolbengeometrie sind wichtige Einflussgrößen insbesondere die Ausgestaltungen der Kolbenmulde und der Ventiltaschen.

Der mathematische Bewertungsalgorithmus ist dazu ausgebildet, zu bewerten, mit welcher Einzelwahrscheinlichkeit jede der einzelnen Einflussgrößen zur Ausbildung einer der Hypothesen beiträgt. Darüber hinaus bildet der Bewertungsalgorithmus eine Gesamtwahrscheinlichkeit für das Auftreten jeder einzelnen Hypothese aus den Einzelwahrscheinlichkeiten. Dieses soll nachfolgend anhand eines Beispiels veranschaulicht werden. Wenn die Brennkraftmaschine mit einem Piezo-Injektor (beispielsweise mit einer so genannten A-Düse) ausgerüstet ist, ist die Einzelwahrscheinlichkeit, dass dieser Parameter zu der Hypothese beiträgt, dass ein gemessenes Flammlichtsignal an dem Piezo-Injektor durch ein so genanntes "Tip Sooting" entsteht, nahezu Null. Die Gesamtwahrscheinlichkeit, dass diese Hypothese zutrifft, ist dann folglich ebenfalls nahezu Null.

Das vorstehend erläuterte Verfahren zur Visualisierung eines Verbrennungsprozesses eines Kraftstoff-Luft-Gemischs in einem Brennraum einer Brennkraftmaschine kann insbesondere in einem statischen oder dynamischen Motorenprüfstand oder auch in einem Rollenprüfstand für Kraftfahrzeuge eingesetzt werden. Es kann unter anderem als Hilfsmittel für einen Vergleich von Injektoren, zur Festlegung von Einspritzstrategien, für das Auffinden von Klopforten und für die Betrachtung der Flammenausbreitung innerhalb des Brennraums der Brennkraftmaschine verwendet werden.

## Patentansprüche

1. Verfahren zur Visualisierung eines Verbrennungsprozesses eines Kraftstoff-Luft-Gemischs innerhalb, eines Brennraums einer Brennkraftmaschine, wobei mittels einer mehrkanaligen optischen Messsonde (2) Flammlichtsignale, die während der Verbrennung des Kraftstoff-Luft-Gemischs innerhalb des Brennraums generiert werden, in mehreren Detektionsvolumina (20) erfasst werden und wobei die Lichtintensitäten der Flammlichtsignale von einer Auswerte- und Visualisierungseinrichtung (5) ausgewertet und grafisch visualisiert werden, **dadurch gekennzeichnet, dass** Informationen über die Position der Flamme innerhalb der Detektionsvolumina (20) durch die Bildung von Hypothesen, die mögliche Orte der Flammenentstehung und mögliche Arten der Flammenausbreitung innerhalb des Brennraums der Brennkraftmaschine beinhalten, und durch die Auswahl einer am wahrscheinlichsten Hypothese mittels eines in der Auswerte- und Visualisierungseinrichtung (5) implementierten mathematischen Bewertungsalgorithmus bereitgestellt werden und von der Auswerte- und Visualisierungseinrichtung (5) grafisch visualisiert werden, wobei von dem mathematischen Bewertungsalgorithmus eine Mehrzahl von Einflussgrößen im Hinblick darauf bewertet wird, mit welcher Einzelwahrscheinlichkeit jede dieser Einflussgrößen zur Ausbildung einer der Hypothesen beiträgt, und wobei der mathematische Bewertungsalgorithmus aus den Einzelwahrscheinlichkeiten eine Gesamtwahrscheinlichkeit für das Auftreten jeder einzelnen Hypothese bildet.

2. Verfahren nach Anspruch 1, **dadurch.gekennzeichnet, dass** die Flammlichtsignale in mehreren unterschiedlichen Ebenen innerhalb des Brennraums erfasst werden.

3. Verfahren nach einem der Ansprüche 1 oder 2, **dadurch gekennzeichnet, dass** ein Zeitsignal, insbesondere ein Kurbelwinkelsignal, erfasst wird, dem die Flammlichtsignale zugeordnet werden.

4. Verfahren nach einem der Ansprüche 1 bis 3, **dadurch gekennzeichnet, dass** von der Auswerte- und Visualisierungseinrichtung (5) eine Darstellung des Verbrennungsprozesses des Kraftstoff-Luft-Gemischs als dreidimensionale Animation erzeugt und grafisch visualisiert wird.

5. Verfahren nach einem der Ansprüche 1 bis 4, **dadurch gekennzeichnet, dass** als Merkmale, die von dem mathematischen Bewertungsalgorithmus zur Unterscheidung und Bewertung der Hypothesen ausgewertet werden, insbesondere die Ausbreitung der Flammlichtsignale in den einzelnen Sensorkanälen der mehrkanaligen optischen Messsonde (2), vorzugsweise in den unterschiedlichen Sensorebenen der Messsonde (2), und/oder die Intensität im Vergleich zu einem Vormischanteil und/oder der Zeitpunkt der Lichtstrahlung, die zu den erfassten Flammlichtsignalen führt, und/oder die Zeitdauer der Flammlichtsignale ausgewählt werden.

6. Verfahren nach einem der Ansprüche 1 bis 5, **dadurch gekennzeichnet, dass** von der Auswerte- und Visualisierungseinrichtung (5) zusätzliche Hilfssignale von der Brennkraftmaschine empfangen und verarbeitet werden, die ebenfalls in die Auswertung und Visualisierung der Messsignale einfließen.

7. Verfahren nach einem der Ansprüche 1 bis 6, **dadurch gekennzeichnet, dass** in der Auswerte- und Visualisierungseinrichtung (5) Referenzsignale abrufbar gespeichert werden, die mit den gemessenen Flammlichtsignalen verglichen werden.

## Claims

1. Method for visualizing a combustion process of a fuel-air mixture within a combustion chamber of an internal combustion engine, flame light signals that are generated during the combustion of the fuel-air mixture within the combustion chamber being detected in a number of detection volumes (20) by means of a multi-channel optical measuring probe (2) and the light intensities of the flame light signals being evaluated and graphically visualized by an evaluating and visualizing device (5), **characterized in that** information concerning the position of the flame within the detection volumes (20) is provided by the formation of hypotheses, which comprise possible locations of the production of the flame and possible types of flame propagation within the combustion chamber of the internal combustion engine, and by the selection of a most probable hypothesis by means of a mathematical assessment algorithm implemented in the evaluating and visualizing device (5) and is graphically visualized by the evaluating and visualizing device (5), a plurality of influencing variables being assessed by the mathematical assessment algorithm with respect to with which individual probability each of these influencing variables contributes to the formation of one of the hypotheses, and the mathematical assessment algorithm forming from the individual probabilities an overall probability of the occurrence of each individual hypothesis.

2. Method according to Claim 1, **characterized in that** the flame light signals are detected in a number of different planes within the combustion chamber.

3. Method according to either of Claims 1 and 2, **characterized in that** a time signal, in particular a crank angle signal, to which the flame light signals are assigned is detected.

4. Method according to one of Claims 1 to 3, **characterized in that** a representation of the combustion process of the fuel-air mixture as a three-dimensional animation is generated and graphically visualized by the evaluating and visualizing device (5).

5. Method according to one of Claims 1 to 4, **characterized in that** selected as features that are evaluated by the mathematical assessment algorithm for differentiating between and assessing the hypotheses are in particular the propagation of the flame light signals in the individual sensor channels of the multi-channel optical measuring probe (2), preferably in the different sensor planes of the measuring probe (2), and/or the intensity in comparison with a premixed fraction and/or the point in time of the light radiation that leads to the detected flame light signals and/or the time duration of the flame light signals.

6. Method according to one of Claims 1 to 5, **characterized in that** additional auxiliary signals from the internal combustion engine are received and processed by the evaluating and visualizing device (5) and are likewise incorporated in the evaluation and visualization of the measuring signals.

7. Method according to one of Claims 1 to 6, **characterized in that** reference signals are retrievably stored in the evaluating and visualizing device (5) and compared with the measured flame light signals.

## Revendications

1. Procédé de visualisation d'un processus de combustion d'un mélange air-carburant à l'intérieur d'une chambre de combustion d'un moteur à combustion interne, dans lequel des signaux de lumière de flamme, qui sont générés pendant la combustion du mélange air-carburant, sont détectés dans plusieurs volumes de détection (20) au moyen d'une sonde de mesure optique (2) à plusieurs canaux, et les intensités de lumière des signaux de lumière de flamme étant évaluées et visualisées graphiquement par un dispositif d'évaluation et de visualisation (5),
**caractérisé en ce que** des informations sur la position de la flamme à l'intérieur des volumes de détection (20) sont fournies par la formulation d'hypothèses qui contiennent des lieux possibles de la création de flamme et des types possibles de la propagation de flamme à l'intérieur de la chambre de combustion du moteur à combustion interne, et par la sélection d'une hypothèse la plus probable au moyen d'un algorithme d'analyse mathématique mis en œuvre dans le dispositif d'évaluation et de visualisation (5), et sont visualisées graphiquement par le dispositif d'évaluation et de visualisation (5), l'algorithme d'analyse mathématique analysant une pluralité de grandeurs d'influence quant à la probabilité individuelle avec laquelle chacune de ces grandeurs d'influence contribue à la réalisation d'une des hypothèses, et l'algorithme d'analyse mathématique formant à partir des probabilités individuelles une probabilité globale de l'apparition de chaque hypothèse individuelle.

2. Procédé selon la revendication 1, **caractérisé en ce que** les signaux de lumière de flamme sont détectés dans plusieurs plans différents à l'intérieur de la chambre de combustion.

3. Procédé selon l'une quelconque des revendications 1 et 2, **caractérisé en ce qu'**un signal de temps, en particulier un signal d'angle de vilebrequin, est détecté auquel les signaux de lumière de flamme sont associés.

4. Procédé selon l'une quelconque des revendications 1 à 3, **caractérisé en ce qu'**une représentation du processus de combustion du mélange air-carburant est générée sous la forme d'une animation en trois dimensions et visualisée graphiquement par le dispositif d'évaluation et de visualisation (5).

5. Procédé selon l'une quelconque des revendications 1 à 4, **caractérisé en ce que** comme particularités que l'algorithme d'analyse mathématique évalue pour différencier et analyser les hypothèses on sélectionne en particulier la propagation des signaux de lumière de flamme dans les canaux de capteur individuels de la sonde de mesure optique (2) à plusieurs canaux, de préférence dans les différents plans de capteur de la sonde de mesure (2), et/ou l'intensité en comparaison avec une part de prémélange et/ou l'instant du rayonnement lumineux conduisant aux signaux de lumière de flamme détectés, et/ou la durée des signaux de lumière de flamme.

6. Procédé selon l'une quelconque des revendications 1 à 5, **caractérisé en ce que** le dispositif d'évaluation et de visualisation (5) reçoit et traite des signaux auxiliaires supplémentaires du moteur à combustion interne qui entrent également dans l'évaluation et la visualisation des signaux de mesure.

7. Procédé selon l'une quelconque des revendications 1 à 6, **caractérisé en ce que** des signaux de référence qui sont comparés aux signaux de lumière de flamme mesurés sont enregistrés de manière consultable dans le dispositif d'évaluation et de visualisation (5).
